# EUROPÄISCHE PATENTANMELDUNG

(11) **EP 1 677 541 A2**
(43) Veröffentlichungstag der Anmeldung: **05.07.2006**
(21) Anmeldenummer: 05019833.2
(22) Anmeldetag: 13.09.2005
(51) Int. Cl.: H04N 7/26, H04N 7/46

(54) **Verfahren und Anordnung zur Fernübertragung von Bilddaten**

(30) Priorität: 30.12.2004 DE 102004063796
(71) Anmelder: ASTRA Gesellschaft für Asset Management mbH & Co. KG, 30890 Barsinghausen (DE)
(72) Erfinder: Stobbe, Anatoli, 30890 Barsinghausen (DE)
(74) Vertreter: Körner, Peter

(57) **Zusammenfassung**

Es wird ein Verfahren und eine Anordnung zur Fernübertragung von Daten, die wenigstens Bilddaten umfassen und von denen Bilddaten eines Gesamtbildes wenigstens einmalig übertragen werden, beschrieben.

Zusätzlich werden Bilddaten wenigstens eines für eine Überwachung relevanten Ausschnittes des Gesamtbildes übertragen und aktualisierte Bilddaten des wenigstens einen Ausschnittes werden häufiger oder in kürzeren Zeitabständen als die Bilddaten des Gesamtbildes übertragen werden und der Ausschnitt des Gesamtbildes durch aktualisierte Bilddaten ersetzt.

## Beschreibung

Die Erfindung betrifft ein Verfahren zur Fernübertragung von Daten, die wenigstens Bilddaten umfassen, nach dem Oberbegriff des Anspruchs 1 und eine Anordnung zur Fernübertragung von Daten, die wenigstens Bilddaten umfassen, nach dem Oberbegriff des Anspruchs 22.

Zur Objektüberwachung ist es bekannt, Bilddaten sowie weitere mit Sensoren erfassbare Daten lokal am oder im zu überwachenden Objekt oder in der Nähe des zu überwachenden Objektes zu erfassen und zu einer Überwachungszentrale zu übertragen. Bei kurzen Übertragungsstrecken sind als Übertragungsmedium private Kabel- oder Funknetze kostengünstig realisierbar, die über die nötige Bandbreite für eine kontinuierliche Übertragung hoher Datenraten verfügen und damit auch eine kontinuierliche Übertragung von bewegten Bildern ermöglichen.

Für eine Übertragung über größere Entfernungen oder bei fehlender Realisierungsmöglichkeit privater Kabel- oder Funknetze hingegen müssen öffentliche Kommunikationsnetze genutzt werden, bei denen eine Abrechnung der übertragenen Daten nach Zeit oder Volumen erfolgt, wie das Internet, oder die systembedingt nur eine beschränkte Bandbreite bieten, wie das Telefon-Festnetz oder das Mobilfunknetz. Hier ist die kontinuierliche Übertragung von Bilddaten hoch auflösender Bilder unwirtschaftlich oder nicht möglich.

Der Erfindung liegt die Aufgabe zugrunde, ein Verfahren und eine Anordnung zur Fernübertragung von Daten, die wenigstens Bilddaten umfassen, zu schaffen, welche eine zeitnahe Übertragung der für eine wirksame Überwachung relevanten Daten ermöglichen.

Diese Aufgabe wird bei einem Verfahren nach dem Oberbegriff des Anspruchs 1 durch die Merkmale dieses Anspruchs und bei einer Anordnung nach dem Oberbegriff des Anspruchs 22 durch die Merkmale jenes Anspruchs gelöst.

Weiterbildungen und vorteilhafte Ausgestaltungen ergeben sich aus den jeweiligen Unteransprüchen.

Durch das erfindungsgemäße Verfahren und die die erfindungsgemäße Anordnung wird nach Übertragung des Gesamtbildes ein Ausschnitt des Gesamtbildes häufiger als das Gesamtbild übertragen und der Ausschnitt des Gesamtbildes durch den aktualisierten Ausschnitt ersetzt. Der Ausschnitt umfasst die für eine wirksame Überwachung relevanten Daten. Durch das Gesamtbild wird für das Überwachungspersonal die Gesamtübersicht gewahrt und gleichzeitig die für eine Überwachung relevanten Ausschnitte zeitnah aktualisiert. Das zu übertragende Gesamtvolumen an Daten wird hierbei drastisch reduziert.

Gemäß einer Weiterbildung können Initialisierungskriterien festgelegt werden, bei deren Erfüllung wenigstens eine Übertragung von Bilddaten des wenigstens einen Ausschnittes wenigstens einmalig vorgenommen wird oder eine vordefinierte Aktion, wie Änderung der Kameraeinstellung, Aktivierung von Sensoren, Aktivierung von optischen oder akustischen Signalgebern, Aktivieren von Lichtquellen, Aktivieren von Alarmen, ausgelöst wird.

Dadurch lassen sich der Zeitpunkt und die Häufigkeit der Übertragung von Bilddaten anhand der Initialisierungskriterien steuern und so eine bedarfsorientierte Aktualisierung realisieren. Das zu übertragende Gesamtvolumen an Daten sowie die Nutzungsdauer des Übertragungsmediums kann auf diese Weise auf das für eine wirksame Überwachung gerade nötige Maß beschränkt werden. Weiterhin lässt sich wenigstens eine der vordefinierten Aktionen automatisch und damit ohne Datendialog mit der Überwachungszentrale auslösen.

Als Initialisierungskriterien können Änderungen der Kameraeinstellung, wie horizontaler oder vertikaler Winkel oder Zoom, ausgewertet werden.

Die erneute Übertragung der Daten des Gesamtbildes und/oder des Ausschnittes kann so bei Ausbleiben anderer Initialisierungskriterien auf Änderungen der Kameraeinstellung beschränkt werden.

Bei Erfüllung der Initialisierungskriterien kann der wenigstens eine Ausschnitt des Gesamtbildes neu oder aufgrund gespeicherter Kriterien geändert festgelegt werden.

Dadurch wird bei der nachfolgenden Übertragung von aktualisierte Bilddaten des wenigstens einen Ausschnittes wiederum das zu übertragende Gesamtvolumen an Daten sowie die Nutzungsdauer des Übertragungsmediums auf das für eine wirksame Überwachung gerade nötige Maß beschränkt.

Als Initialisierungskriterien können wenigstens die Daten eines Einbruchssensors oder eines meteorologischen Sensors oder eines akustischen Sensors oder eines Bewegungssensors oder eines Lichtschrankensensors oder einer Kombination wenigstens zweier dieser Sensoren oder wenigstens eines innerhalb des Gesamtbildes festlegbaren Detektionsbereichs, in dem Änderungen von Bildinformationen auftreten, ausgewertet werden.

Dabei kann der wenigstens eine Detektionsbereich deckungsgleich mit dem wenigstens einen Ausschnitt des Gesamtbildes sein. Es besteht aber auch die Möglichkeit, den Detektionsbereich innerhalb oder außerhalb des Ausschnittes des Gesamtbildes oder innerhalb und außerhalb des Ausschnittes mit diesem überlappend anzuordnen.

Durch Auswertung der Daten wenigstens eines Sensors oder einer Kombination von Sensoren lassen sich gezielt Ereignisse unterschiedlicher physikalischer Art für eine Initialisierung heranziehen. Durch kombinierte Auswertung kann durch Redundanz unterschiedlicher physikalischer Auswirkungen desselben Ereignisses die Zuverlässigkeit der Initialisierung verbessert werden.

Bei Erfüllung der Initialisierungskriterien durch eine geänderte Kameraeinstellung kann der wenigstens eine Detektionsbereich neu oder aufgrund gespeicherter Kriterien geändert festgelegt werden.

Dadurch wird auch der Detektionsbereich innerhalb des Gesamtbildes automatisch an eine geänderte Kameraeinstellung angepasst.

Als Initialisierungskriterien für die Daten eines innerhalb des Gesamtbildes festlegbaren Detektionsbereichs können Änderungen von Bildinformationen an sich oder in einer Zeitspanne oder Änderungen der Menge von Bildinformationen an sich oder in einer Zeitspanne oder Änderungen der örtlichen Verteilung von Bildinformationen an sich oder innerhalb einer Zeitspanne oder einer Kombination wenigstens zweier der Initialisierungskriterien ausgewertet werden.

Hierdurch lassen sich Bewegungsereignisse als Initialisierungskriterien nutzen. Durch Auswertung der Änderungen der Menge von Bildinformationen an sich oder in einer Zeitspanne oder Änderungen der örtlichen Verteilung von Bildinformationen an sich oder innerhalb einer Zeitspanne kann auch eine Analyse hinsichtlich der Ursache der Änderungen erfolgen. So lassen sich beispielsweise Änderungen der Bildinformationen verursacht durch meteorologische Einflüsse oder Kleintiere von Änderungen der Bildinformationen unterscheiden, die durch Menschen oder Fahrzeuge verursacht werden.

Die Initialisierungskriterien können durch eine interne Auswerteschaltung der Kamera ausgewertet werden und die Übertragung von Daten des Gesamtbildes oder des Ausschnittes über ein lokales Netzwerk kann durch die interne Auswerteschaltung der Kamera nur bei Erfüllung wenigstens eines Initialisierungskriteriums oder einer Kombination von Initialisierungskriterien veranlasst werden.

Die Verlagerung der Auswertung von Initialisierungskriterien in eine interne Auswerteschaltung der Kamera ermöglicht es, Bilddaten über ein lokales Netzwerk nur bei Änderungen zu übertragen. Dadurch wird die benötigte Übertragungsbandbreite des lokalen Netzwerkes reduziert. Dies ist besonders bei mehreren an das lokale Netzwerk angeschlossenen Kameras vorteilhaft und bei Umgebungen, in denen mehrere benachbarte lokale Netzwerke parallel betrieben werden oder nur ein schmalbandiger Funkkanal zur Verfügung steht.

Alternativ können die Initialisierungskriterien durch eine interne Auswerteschaltung der Kamera ausgewertet werden und bei Erfüllung eines Initialisierungskriteriums oder einer Kombination von Initialisierungskriterien wenigstens ein eine lokale Aktion, insbesondere ein physikalisches Ereignis wie Schall oder Licht ausgelöst werden. Anschließend können die Initialisierungskriterien einzeln oder in Kombination oder in Kombination mit der wenigstens einen lokalen Aktion fortgesetzt oder erneut analysiert werden und die Übertragung von Daten des Gesamtbildes oder des Ausschnittes über ein lokales Netzwerk durch die interne Auswerteschaltung der Kamera nur bei fortdauernder oder erneuter Erfüllung eines Initialisierungskriteriums oder einer Kombination von Initialisierungskriterien veranlasst werden.

Hierdurch kann zunächst versucht werden, Eindringlinge zu warnen, die in den zu überwachenden Bereich gelangt sind und zur Aufgabe zu bewegen, ehe die Übertragung von Daten des Gesamtbildes oder des Ausschnittes über ein lokales Netzwerk vorgenommen wird. Ebenso lassen sich auch Artefakte erkennen und herausfiltern, die nicht durch Eindringlinge in den zu überwachenden Bereich ausgelöst werden. Die benötigte Übertragungsbandbreite des lokalen Netzwerkes wird auf diese Weise nochmals reduziert.

Der wenigstens eine Detektionsbereich kann für eine Kameraeinstellung einmalig oder durch vorangehende Ermittlungen festgelegt werden.

Dadurch lassen sich lokale Bereiche des zu überwachenden Objektes oder seiner Umgebung definieren, die für die Überwachung bedeutend sind. Somit werden nur Ereignisse ausgewertet, die für eine Initialisierung der Übertragung von Bilddaten relevant sind. Andere Ereignisse bleiben unberücksichtigt und erhöhen somit nicht das zu übertragende Gesamtvolumen an Daten.

Der wenigstens eine Detektionsbereich kann vorläufig einmalig oder durch vorangehende Ermittlungen eingegrenzt werden und durch statistische Auswertung von Änderungen von Bildinformationen innerhalb oder außerhalb des vorläufigen Detektionsbereichs eingeschränkt oder erweitert werden.

Hierdurch ist auch eine automatische dynamische Anpassung des Detektionsbereichs möglich, wodurch die Zuverlässigkeit der Initialisierung verbessert und gleichzeitig das zu übertragende Gesamtvolumen an Daten bedarfsgerecht anpasst wird.

Weiterhin kann der wenigstens eine Ausschnitt des Gesamtbildes, dessen Bilddaten zusätzlich übertragen werden, vorläufig einmalig oder durch vorangehende Ermittlungen eingegrenzt werden und durch statistische Auswertung von Änderungen von Bildinformationen innerhalb oder außerhalb des Detektionsbereichs eingeschränkt oder erweitert werden.

Dadurch wird auch eine dynamische Anpassung des Ausschnittes des Gesamtbildes ermöglicht und die Zuverlässigkeit erhöht, alle relevanten Bilddaten aktualisiert zu übertragen.

Die Bilddaten des Gesamtbildes können als Bewegtbild in komprimierter Form oder als Standbild in komprimierter Form übertragen werden. Auch die Bilddaten des wenigstens einen Ausschnittes des Gesamtbildes können als Bewegtbild in komprimierter Form oder als Standbild in komprimierter Form übertragen werden.

Durch Nutzung von Komprimierungsverfahren kann somit das Gesamtvolumen an zu übertragenden Daten weiter reduziert werden.

Zusätzlich zu den Bilddaten können Daten eines Einbruchssensors oder eines meteorologischen Sensors oder eines akustischen Sensors oder eines Bewegungssensors oder einer Kombination wenigstens zweier der Sensoren unkomprimiert oder in komprimierter Form übertragen werden.

Diese Daten liefern dem Überwachungspersonal einmal zusätzlich Information zu dem zu überwachenden Objekt und ermöglichen außerdem eine nachträgliche Überprüfung von Intitialisierungskriterien.

Der wenigstens eine Ausschnitt des Gesamtbildes kann nach Übertragung in das Gesamtbild unter Angleichung von Bildparametern, wie Helligkeit oder Kontrast oder einer Kombination aus Helligkeit und Kontrast oder der Übergänge in das Gesamtbild integriert werden.

Diese Maßnahme ermöglicht eine ergonomische Verbesserung des den Ausschnitt enthaltenden Gesamtbildes.

Ergänzend kann der wenigstens ein Ausschnitt des Gesamtbildes innerhalb des Gesamtbildes markiert werden.

Weiterhin kann auch der wenigstens eine Detektionsbereich innerhalb des Gesamtbildes markiert werden.

Hierdurch wird die Überwachung des Gesamtbildes hinsichtlich des relevanten aktualisierten Ausschnittes sowie des Detektionsbereichs erleichtert.

Bei Übertragung von Bilddaten mehrerer Kameras können den Bilddaten Prioritätsformationen zugeordnet werden und die zur Verfügung stehende Übertragungsbandbreite oder Übertragungsreihenfolge dieser Bilddaten anhand ihrer Prioritätsformationen zugewiesen werden. Die Prioritätsformationen können nach festgelegten oder dynamischen Kriterien gewichtet werden, wie Relevanz der Bilddaten für die Objektüberwachung oder eines Ausschnittes des Gesamtbildes oder der Initialisierungskriterien oder einer Kombination dieser Kriterien.

Hierdurch wird wichtigen Bilddaten eine höhere Priorität und damit Vorrang gegenüber weniger wichtigen Bilddaten gegeben. Die wichtigen Bilddaten können so früher und häufiger übertragen werden. Trotz begrenzter Übertragungsbandbreite wird dann eine zeitnahe Übermittlung relevanter Bilddaten erreicht.

Bei Übertragung von Bilddaten mehrerer Kameras, die aneinandergrenzende oder überlappende Bereiche eines Gesamtbildes erfassen, können die Bilddaten zu einem Gesamtbild ergänzt werden.

Dadurch lassen sich aus Bildern von Einzelkameras Gesamtbilder in Form von Panoramaansichten oder Rundumansichten mit hoher Bildauflösung schaffen. Auch sind Gesamtbilder in benutzerdefinierten Breiten-Höhenabmessungen möglich.

Bei zusätzlicher Übertragung von Daten eines Einbruchssensors oder eines meteorologischen Sensors oder eines akustischen Sensors oder eines Bewegungssensors zusätzlich zur Übertragung von Bilddaten kann den Daten des Einbruchssensors, des meteorologischen Sensors, des akustischen Sensors, des Bewegungssensors, des Lichtschrankensensors und den Bilddaten Prioritätsformationen zugeordnet werden und die zur Verfügung stehende Übertragungsbandbreite diesen Daten anhand ihrer Prioritätsformationen zugewiesen werden.

Auch hierdurch kann wichtigen Informationen, wie Bilddaten und Daten eines akustischen Sensors bei Eintritt eines Ereignisses Vorrang gegenüber anderen Daten gegeben werden. Trotz begrenzter Übertragungsbandbreite wird dann eine zeitnahe Übermittlung relevanter Bilddaten und akustischer Daten erreicht.

Nachfolgend wird die Erfindung anhand von Ausführungsbeispielen beschrieben, die in der Zeichnung dargestellt sind. Darin zeigen:
Fig. 1 ein Kamerabild eines zu überwachenden Objektes,
Fig. 2 ein Blockschaltbild einer am zu überwachenden Objekt angeordneten Überwachungsvorrichtung,
Fig. 3 ein detailliertes Blockschaltbild einer Signalverarbeitungsvorrichtung der Überwachungsvorrichtung für eine Kamera und
Fig. 4 ein detailliertes Blockschaltbild einer Signalverarbeitungsvorrichtung der Überwachungsvorrichtung für mehrere Kameras.

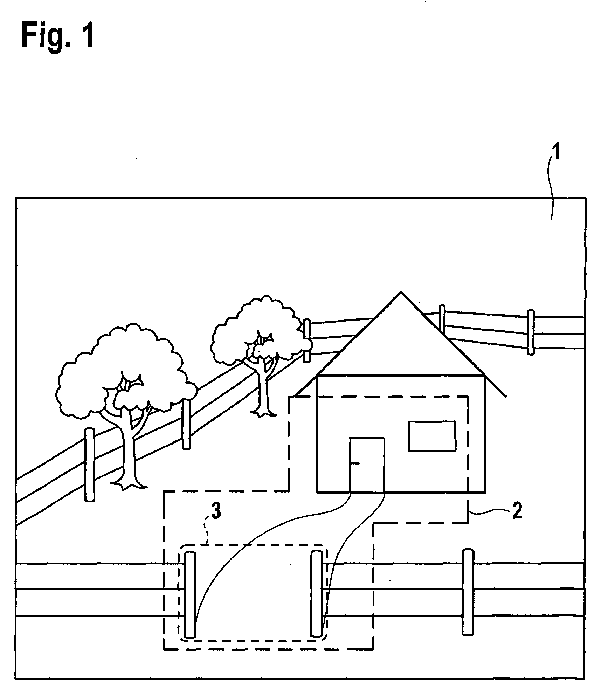

Fig. 1 zeigt ein Kamerabild eines zu überwachenden Objektes. Innerhalb des dargestellten Gesamtbildes 1 ist ein Ausschnitt 20 markiert, der eine Tür und ein Fenster des Gebäudes sowie einen Zuweg umfasst. Ferner ist noch ein Detektionsbereich 3 am Anfang des Zuweges markiert.

Das Kamerabild liefert ein Gesamtbild des Objektes und seiner Umgebung, das als Gesamtzusammenhang für eine Überwachung wichtig ist. Die Bilddaten des Gesamtbildes 1 werden zu einer Überwachungszentrale übertragen. Um im Falle eines Einbruchs Bildinformationen des Täters zu erhalten, wird der mögliche Bildbereich festgelegt, innerhalb dessen sich der Täter bei seinem Einbruchsversuch bewegen könnte. Dies ist nicht der gesamte Bildbereich, sondern nur der Zuweg sowie der Bereich in der Nähe der Tür und des Fensters. Dieser Bereich ist durch den markierten Ausschnitt 2 festgelegt.

Um den Gesamtüberblick des Objektes und seiner Umgebung zu erhalten, wird das Gesamtbild 1 einmalig oder in längeren Zeitabständen als Standbild übertragen. Dadurch wird für die Übertragung über ein Übertragungsmedium nur ein vergleichsweise geringes Volumen an Bilddaten sowie Übertragungszeit in Anspruch genommen. Um dennoch eine schnelle Aktualisierung des sicherheitsrelevanten Bereichs zu erhalten, werden Bilddaten des markierten Ausschnittes 2 häufiger übertragen. Dies kann durch eine Folge von Standbildern in kurzen Zeitabständen oder auch durch Bewegbilder erfolgen, die aber auf den Ausschnitt 2 beschränkt sind. Da hierbei weniger Bilddaten übertragen werden müssen, als für das Gesamtbild, wird über das Übertragungsmedium nur ein geringeres Gesamtvolumen an Daten übertragen oder eine geringere Übertragungszeit im Falle der Übertragung von Standbildern benötigt. Dennoch erhält die Überwachungszentrale aktualisierte Informationen.

Zusätzlich kann ein Detektionsbereich 3 festgelegt werden, den der Täter durchschreiten muss. Bildänderungen dieses Detektionsbereiches können als Initialisierungskriterium für die Übertragung von Bilddaten des Ausschnittes 2 genutzt werden sowie zur Aktivierung von Sensoren und Aktoren, die im Zusammenhang mit diesem Ausschnitt 2 stehen.

Seitens der Überwachungszentrale werden dann die Bilddaten des Ausschnittes 2 in die Bilddaten des vorher übertragenen oder bereits verfügbaren Gesamtbildes 1 eingesetzt, indem die entsprechenden Bildbereiche durch die aktualisierten Bildinformationen ersetzt werden.

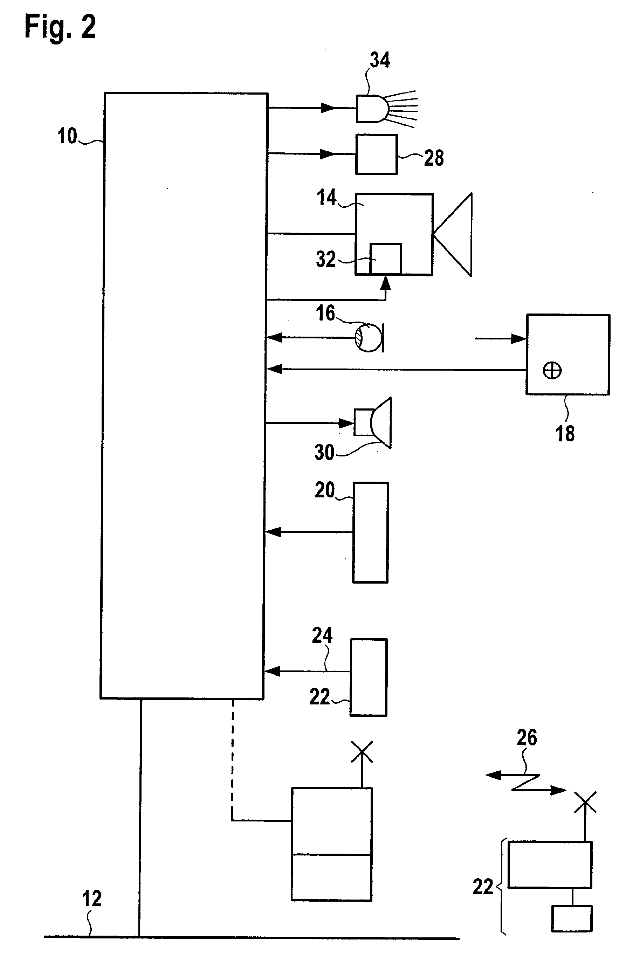

Fig. 2 zeigt ein Blockschaltbild einer am zu überwachenden Objekt angeordneten Überwachungsvorrichtung. Eine Steuereinheit 10, die z. B. im Gehäuse einer Kamera angeordnet sein kann, ist mit einem Übertragungsmedium 12 verbunden. Bei dem Übertragungsmedium kann es sich um ein lokales Übertragungsmedium handeln, wie z. B. ein Leitungs- oder Funksystem, ein Bussystem, ein leitungsgebundenes Netzwerk, wie Lan, ein Funknetzwerk, wie WLAN, oder ein öffentliches Übertragungsmedium, wie Festnetz-Telefon, Festnetz-Internet, oder Funknetze, wie GSM oder UMTS.

An die Steuereinheit 10 sind ferner eine Kamera 14 sowie Sensoren und Aktoren angeschlossen. Bei den Sensoren kann es sich um akustische Sensoren, z. B. Mikrofone 16, Alarmsensoren 18, wie Erschütterungssensoren oder Glasbruchsensoren; meteorologische Sensoren 20 zur Erfassung von Temperatur, Feuchtigkeit, Windgeschwindigkeit oder Bewegungssensoren 22 auf Infrarot-, Ultraschall- oder Radarbasis oder Lichtschrankensensoren handeln. Die Sensoren können über Leitungen 24 oder drahtlos, z. B. über Funk 26, mit der Steuereinheit 10 gekoppelt sein. Ergänzend kann die Steuereinheit 10 auch Ausgänge zur Steuerung von Aktoren, wie optische oder akustische Alarmgeber 28, Tonwiedergabegeräte, Schallwandler 30, Selbstschussgeräte, elektromechanische Mittel 32 zur Steuerung der Kameraeinstellungen, wie horizontaler und vertikaler Winkel und Zoom umfassen sowie Lichtquellen, z. B. eine Infrarotbeleuchtung 34. Die Steuerbefehle zur Steuerung der Ausgänge und der angeschlossenen Aktoren können dabei von der Überwachungszentrale über das Übertragungsmedium 12 zur Steuereinheit 10 gesendet oder lokal in der Steuereinheit 10 der Kamera selber aktiviert werden.

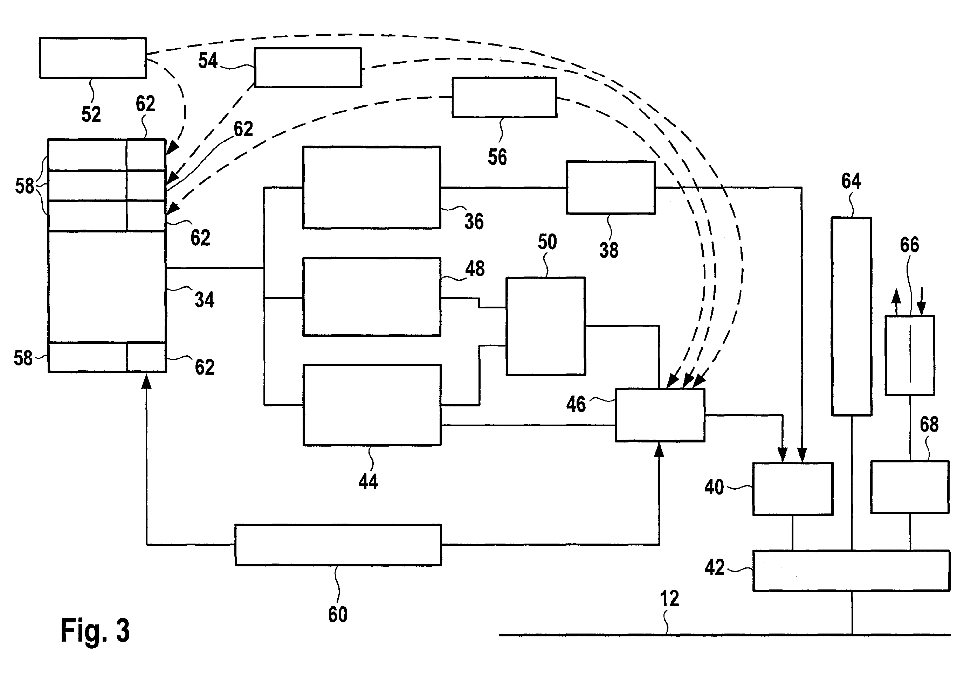

Fig. 3 zeigt ein detailliertes Blockschaltbild einer Signalverarbeitungsvorrichtung der Überwachungsvorrichtung für eine Kamera 34. Bei der Kamera handelt es sich um eine Videokamera, an deren Ausgang analoge oder digitale Signale ausgegeben werden. In einem Speicher 36 eines Coders wird ein Gesamtbild gespeichert und dieses mittels eines Timers 38 einem Codek 40 für Bilddaten zugeführt. Dieser komprimiert die Bilddaten und übergibt sie über eine kombinierte Vorrangschaltung und Sende-/Empangsvorrichtung 42 an ein Übertragungsmedium 12.

Aus dem Gesamtbild der Kamera wird ferner ein erster Bildausschnitt selektiert und in einem Speicher 44 zwischengespeichert. Dieser erste Bildausschnitt wird durch einen Timer 46 ebenfalls dem Codek 40 sowie der kombinierten Vorrangschaltung und Sende-/Empangsvorrichtung 42 dem Übertragungsmedium 12 zugeführt. Mittels des Timers 46 wird der Bildausschnitt häufiger übertragen als das Gesamtbild mittels des Timers 38.

Zusätzlich werden auch noch Bilddaten eines Detektionsbereichs als zweiter Bildausschnitt in einem Speicher 48 gespeichert. Die vorliegende Schaltung behandelt den Fall, dass der erste Bildausschnitt und der zweite Bildausschnitt übereinstimmen und Bilder der Kamera 34 im Speicher 44 für den ersten Bildausschnitt und dem Speicher 48 für den zweiten Bildausschnitt zeitversetzt gespeichert werden. Änderungen der Bildinhalte werden durch einen nachgeschalteten Komperator 50 verglichen. Bei Abweichungen, die auf ein Bewegungsereignis schließen lassen, wird der Timer 46 veranlasst, zusätzlich zu seiner statischen Einstellung sofort eine Serie weiterer Bilddaten des Ausschnitts zu übermitteln. Durch Sensoren und Triggerschaltungen 52, 54, 56 für andere physikalische Ereignisse kann eine Triggerung der Übermittlung des Ausschnittes auch unabhängig von Änderungen des Bildinhalts erfolgen. Die Steuereinheit der Kamera 34 kann auch selber einen akustischen Sensor, wie z. B. ein Mikrofon oder Aktor, wie z. B. einen Lautsprecher zuschalten.

Im Ausführungsbeispiel ist die Kamera 34 als Domkamera ausgebildet und die Kameraeinstellungen sind mittels einer Steuervorrichtung 58 im horizontalen Winkel, vertikalen Winkel und im Zoom einstellbar. Mittels Sensoren und Triggerschaltungen 60 für andere physikalische Ereignisse, die in das Kameragehäuse integriert oder extern angeordnet sind, kann die Kameraeinstellung auch verändert werden. Dazu sind für unterschiedliche Sensoren unterschiedliche Kameraeinstellungen in Speichern 62 gespeichert, die bei Erfüllung von Initialisierungskriterien oder bei Auslösen der Sensoren ausgeführt werden. Aufgrund geänderter Kameraeinstellungen kann ebenfalls über den Timer 38 die Übertragung eines Gesamtbildes und über den Timer 46 die Übertragung von Bilddaten des Ausschnittes vorgenommen werden.

Zusätzlich können auch Sensordaten von einer Signalverarbeitungvorrichtung 64 über die kombinierte Vorrangschaltung und Sende-/Empfangsvorrichtung 42 dem Übertragungsmedium 12 zugeführt und übertragen werden. Weiterhin können auch akustische Informationen über eine Signalverarbeitungvorrichtung 66 über die kombinierte Vorrangschaltung und Sende-/Empfangsvorrichtung 42 dem Übertragungsmedium 12 zugeführt und übertragen oder empfangen werden. Zur Datenreduktion von bidirektionalen akustischen Informationen ist ein weiterer Codek 68 zwischen der Signalverarbeitungvorrichtung 66 und der kombinierten Vorrangschaltung und Sende-/Empfangsvorrichtung 42 angeordnet.

Mittels der kombinierten Vorrangschaltung und Sende-/Empfangsvorrichtung 42 kann die Übertragung von Daten anhand von Prioritätsinformationen vorrangig gegenüber der Übertragung anderer Daten erfolgen.

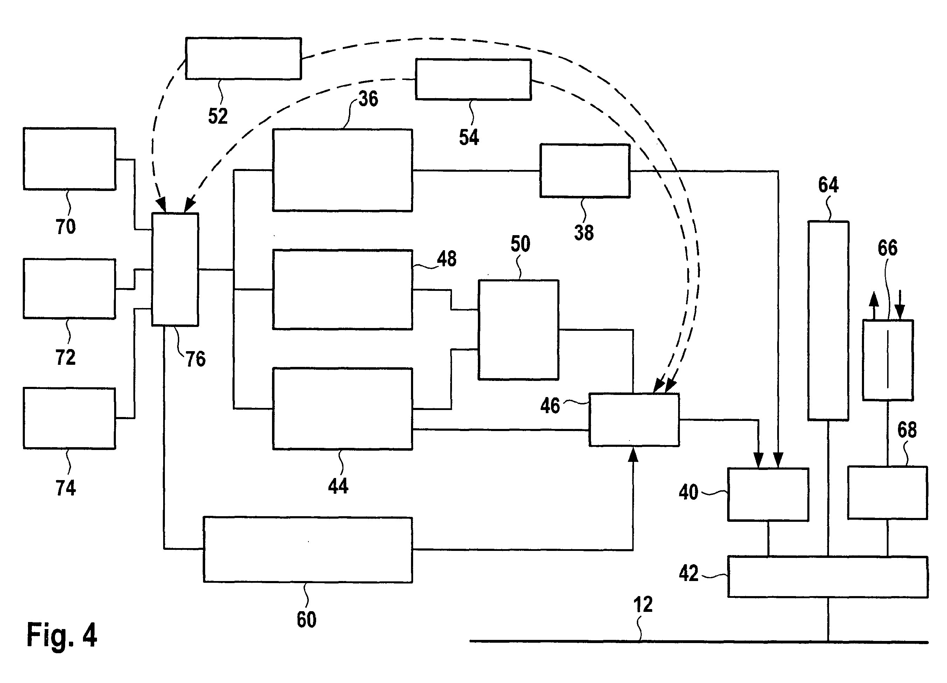

Fig. 4 zeigt ein detailliertes Blockschaltbild einer Signalverarbeitungsvorrichtung der Überwachungsvorrichtung für mehrere Kameras. Hier sind die einzelnen Kameras 70, 72, 74 mit einem Multiplexer 76 verbunden, der die Kamerasignale einer gemeinsamen Bildverarbeitungsschaltung zuführt. Diese entspricht im Wesentlichen der Schaltung nach Fig. 3. Über interne oder externe Sensoren und Triggerschaltungen 52, 54 60, die mit dem Multiplexer 76 verbunden sind, können diejenigen Daten der Kameras 70, 72, 74 vorrangig über den Multiplexer 76 durchgeschaltet werden, deren Bilder aufgrund der Triggerung durch die Sensoren als besonders relevant für eine Übertragung gewichtet werden.

Auch wenn bei einer der Kameras 70, 72, 74 Abweichungen im Detektionsbereich auftreten, kann dieses Ereignis zur Prioritätssteuerung ausgewertet werden.

## Patentansprüche

1. Verfahren zur Fernübertragung von Daten, die wenigstens Bilddaten umfassen und von denen Bilddaten eines Gesamtbildes wenigstens einmalig übertragen werden, **dadurch gekennzeichnet, dass** zusätzlich Bilddaten wenigstens eines für eine Überwachung relevanten Ausschnittes des Gesamtbildes übertragen werden und aktualisierte Bilddaten des wenigstens einen Ausschnittes häufiger oder in kürzeren Zeitabständen als die Bilddaten des Gesamtbildes übertragen werden und der Ausschnitt des Gesamtbildes durch aktualisierte Bilddaten ersetzt wird.

2. Verfahren nach Anspruch 1, **dadurch gekennzeichnet, dass** Initialisierungskriterien festgelegt werden, bei deren Erfüllung wenigstens eine Übertragung von Bilddaten des Gesamtbildes oder des wenigstens einen Ausschnittes wenigstens einmalig vorgenommen wird oder wenigstens eine vordefinierte Aktion, wie Änderung der Kameraeinstellung, Aktivierung von Sensoren, Aktivierung von optischen oder akustischen Signalgebern, Aktivieren von Lichtquellen, Aktivieren von Alarmen, ausgelöst wird.

3. Verfahren nach Anspruch 2, **dadurch gekennzeichnet, dass** als Initialisierungskriterien Änderungen der Kameraeinstellung, wie horizontaler oder vertikaler Winkel oder Zoom, ausgewertet werden.

4. Verfahren nach Anspruch 3, **dadurch gekennzeichnet, dass** bei Erfüllung der Initialisierungskriterien der wenigstens eine Ausschnitt des Gesamtbildes neu oder aufgrund gespeicherter Kriterien geändert festgelegt wird.

5. Verfahren nach Anspruch 2, **dadurch gekennzeichnet, dass** als Initialisierungskriterien wenigstens die Daten eines Einbruchssensors oder eines meteorologischen Sensors oder eines akustischen Sensors oder eines Bewegungssensors oder eines Lichtschrankensensors oder einer Kombination der Daten wenigstens zweier Sensoren oder wenigstens eines innerhalb des Gesamtbildes festlegbaren Detektionsbereichs, in dem Änderungen von Bildinformationen auftreten, ausgewertet werden.

6. Verfahren nach einem der Ansprüche 3 bis 5, **dadurch gekennzeichnet, dass** bei Erfüllung der Initialisierungskriterien durch eine geänderten Kameraeinstellung der wenigstens eine Detektionsbereich neu oder aufgrund gespeicherter Kriterien geändert festgelegt wird.

7. Verfahren nach Anspruch 5 oder 6, **dadurch gekennzeichnet, dass** als Initialisierungskriterien für die Daten eines innerhalb des Gesamtbildes festlegbaren Detektionsbereichs Änderungen von Bildinformationen an sich oder in einer Zeitspanne oder Änderungen der Menge von Bildinformationen an sich oder in einer Zeitspanne oder Änderungen der örtlichen Verteilung von Bildinformationen an sich oder innerhalb einer Zeitspanne oder einer Kombination wenigstens zweier der Initialisierungskriterien ausgewertet werden.

8. Verfahren nach Anspruch 5 oder 7, **dadurch gekennzeichnet, dass** die Initialisierungskriterien durch eine interne Auswerteschaltung der Kamera ausgewertet werden und die Übertragung von Daten des Gesamtbildes oder des Ausschnittes über ein lokales Netzwerk oder ein anderes Übertragungsmedium durch die interne Auswerteschaltung der Kamera nur bei Erfüllung wenigstens eines Initialisierungskriteriums oder einer Kombination von Initialisierungskriterien veranlasst wird.

9. Verfahren nach Anspruch 5 oder 7, **dadurch gekennzeichnet, dass** die Initialisierungskriterien durch eine interne Auswerteschaltung in der Kamera ausgewertet werden, dass bei Erfüllung eines Initialisierungskriteriums oder einer Kombination von Initialisierungskriterien wenigstens eine lokale Aktion, insbesondere ein physikalisches Ereignis wie Schall oder Licht ausgelöst wird, dass anschließend die Initialisierungskriterien einzeln oder in Kombination oder in Kombination mit der wenigstens einen lokalen Aktion fortgesetzt oder erneut analysiert werden und dass die Übertragung von Daten des Gesamtbildes oder des Ausschnittes über ein lokales Netzwerk oder ein anderes Übertragungsmedium durch die interne Auswerteschaltung der Kamera nur bei fortdauernder oder erneuter Erfüllung eines Initiälisierungskriteriums oder einer Kombination von Initialisierungskriterien veranlasst wird.

10. Verfahren nach einem der Ansprüche 5 bis 9, **dadurch gekennzeichnet, dass** der wenigstens eine Detektionsbereich für eine Kameraeinstellung einmalig oder durch vorangehende Ermittlungen festgelegt wird.

11. Verfahren nach einem der Ansprüche 5 bis 9, **dadurch gekennzeichnet, dass** der wenigstens eine Detektionsbereich vorläufig einmalig oder durch vorangehende Ermittlungen eingegrenzt wird und durch statistische Auswertung von Änderungen von Bildinformationen innerhalb oder außerhalb des vorläufigen Detektionsbereichs eingeschränkt oder erweitert wird.

12. Verfahren nach einem der Ansprüche 5 bis 11, **dadurch gekennzeichnet, dass** der wenigstens eine Ausschnitt des Gesamtbildes, dessen Bilddaten zusätzlich übertragen werden, vorläufig einmalig oder durch vorangehende Ermittlungen eingegrenzt wird und durch statistische Auswertung von Änderungen von Bildinformationen innerhalb oder außerhalb des Detektionsbereichs eingeschränkt oder erweitert wird.

13. Verfahren nach einem der Ansprüche 1 bis 12, **dadurch gekennzeichnet, dass** die Bilddaten des Gesamtbildes als Bewegtbild in komprimierter Form oder als Standbild in komprimierter Form übertragen wird.

14. Verfahren nach einem der Ansprüche 1 bis 13, **dadurch gekennzeichnet, dass** die Bilddaten des wenigstens einen Ausschnittes des Gesamtbildes als Bewegtbild in komprimierter Form oder als Standbild in komprimierter Form übertragen wird.

15. Verfahren nach einem der Ansprüche 1 bis 6, **dadurch gekennzeichnet, dass** zusätzlich Daten eines Einbruchssensors oder eines meteorologischen Sensors oder eines akustischen Sensors oder eines Bewegungssensors oder eines Lichtschrankensensors oder einer Kombination wenigstens zweier der Sensoren unkomprimiert oder in komprimierter Form übertragen werden.

16. Verfahren nach einem der Ansprüche 1 bis 15, **dadurch gekennzeichnet, dass** der wenigstens eine Ausschnitt des Gesamtbildes nach Übertragung in das Gesamtbild unter Angleichung von Bildparametern, wie Helligkeit oder Kontrast oder einer Kombination aus Helligkeit und Kontrast oder der Übergänge integriert wird.

17. Verfahren nach Anspruch 16, **dadurch gekennzeichnet, dass** der wenigstens eine Ausschnitt des Gesamtbildes innerhalb des Gesamtbildes markiert wird.

18. Verfahren nach einem der Ansprüche 5 bis 17, **dadurch gekennzeichnet, dass** der wenigstens eine Detektionsbereich innerhalb des Gesamtbildes markiert wird.

19. Verfahren nach einem der Ansprüche der 1 bis 18, **dadurch gekennzeichnet, dass** bei Übertragung von Bilddaten mehrerer Kameras den Bilddaten Prioritätsformationen zugeordnet werden und die zur Verfügung stehende Übertragungsbandbreite oder Übertragungsreihenfolge dieser Bilddaten anhand ihrer Prioritätsformationen zugewiesen wird, wobei die Prioritätsformationen nach festgelegten oder dynamischen Kriterien, wie Relevanz der Bilddaten für die Objektüberwachung oder eines Ausschnittes des Gesamtbildes oder der Initialisierungskriterien oder einer Kombination dieser Kriterien gewichtet werden.

20. Verfahren nach einem der Ansprüche der 1 bis 19, **dadurch gekennzeichnet, dass** bei Übertragung von Bilddaten mehrerer Kameras, die aneinandergrenzende oder überlappende Bereiche eines Gesamtbildes erfassen, die Bilddaten zu einem Gesamtbild ergänzt werden.

21. Verfahren nach einem der Ansprüche der 7 bis 20, **dadurch gekennzeichnet, dass** bei zusätzlicher Übertragung von Daten eines Einbruchssensors oder eines meteorologischen Sensors oder eines akustischen Sensors oder eines Bewegungssensors oder eines Lichtschrankensensors zusätzlich zur Übertragung von Bilddaten den Daten des Einbruchssensors, des meteorologischen Sensors, des akustischen Sensors, des Bewegungssensors, des Lichtschrankensensors und der Bilddaten Prioritätsformationen zugeordnet werden und die zur Verfügung stehende Übertragungsbandbreite oder Übertragungsreihenfolge diesen Daten anhand ihrer Prioritätsformationen zugewiesen wird.

22. Anordnung zur Fernübertragung von Daten, die wenigstens Bilddaten umfassen, mit wenigstens einer Kamera zur Erzeugung von Bilddaten eines Gesamtbildes, einem Coder, einer Sendevorrichtung, einem Übertragungsmedium, einer Empfangsvorrichtung, einem Decoder und einem Monitor zur Darstellung der übertragenen Daten, **dadurch gekennzeichnet, dass** der Decoder einen Speicher und eine programmgesteuerte Bildverarbeitungsschaltung umfasst, dass durch die Bildverarbeitungsschaltung wenigstens ein aktueller Ausschnitt des Gesamtbildes selektierbar und im Speicher Bilddaten des Gesamtbildes und des Ausschnittes ablegbar sind, und mittels der Sendevorrichtung aus dem Speicher Bilddaten des Gesamtbildes wenigstens einmalig und Bilddaten des wenigstens einen Ausschnittes häufiger oder in kürzeren Zeitabständen als die Bilddaten des Gesamtbildes über das Übertragungsmedium zur Empfangsvorrichtung übertragbar sind, und dass der Decoder ebenfalls eine programmgesteuerte Bildverarbeitungsschaltung umfasst, mittels der die aktualisierten Bilddaten des Ausschnittes in die Bilddaten des Gesamtbildes einfügbar und auf dem Monitor darstellbar sind.

23. Anordnung nach Anspruch 22, **dadurch gekennzeichnet, dass** eine Triggerschaltung mit dem Coder verbunden ist oder Bestandteil des Coders ist und mittels der Triggerschaltung aufgrund von Initialisierungskriterien eine Übertragung von Bilddaten des wenigstens einen Ausschnittes wenigstens einmalig veranlaßbar ist.

24. Anordnung nach Anspruch 23, **dadurch gekennzeichnet, dass** die Triggerschaltung eine Zeitsteuerung oder eine festverdrahtete oder programmgesteuerte Auswerteschaltung von Daten eines Einbruchssensors oder eines meteorologischen Sensors oder eines akustischen Sensors oder eines Bewegungssensors oder eines Lichtschrankensensors oder einer Kombination wenigstens zweier dieser Sensoren oder wenigstens von Daten eines innerhalb des Gesamtbildes festlegbaren Detektionsbereichs, in dem Änderungen von Bildinformationen auftreten, umfasst.

25. Anordnung nach einem der Ansprüche 22 bis 24, **dadurch gekennzeichnet, dass** der Coder eine programmgesteuerte oder hardwaregesteuerte Bilddatenkompressionsschaltung und der Decoder eine programmgesteuerte oder hardwaregesteuerte Bilddatenexpansionsschaltung umfasst.

26. Anordnung nach einem der Ansprüche 22 bis 25, **dadurch gekennzeichnet, dass** mit dem Coder wenigstens ein Einbruchssensor oder wenigstens ein meteorologischer Sensor oder wenigstens ein akustischer Sensor oder wenigstens ein Bewegungssensor oder ein Lichtschrankensensor oder eine Kombination wenigstens zweier dieser Sensoren verbunden ist und die Daten der Sensoren mittels des Coders mit den Bilddaten verknüpfbar und mittels der Sendevorrichtung über das Übertragungsmedium zur Empfangsvorrichtung übertragbar sind, und mittels des Decoders die Daten der Sensoren selektierbar und auf dem Monitor darstellbar sind.

27. Anordnung nach Anspruch 26, **dadurch gekennzeichnet, dass** der Coder eine programmgesteuerte Brandbreitenzuweisungsschaltung oder einen Multiplexer umfasst, mittels der/dem Bilddaten und Sensordaten gesteuert durch Prioritätsinformationen, benötigte Bandbreite der Bilddaten und Sensordaten sowie verfügbare Bandbreite des Übertragungsmediums Übertragungsbandbreite oder Übertragungsreihefolge zuweisbar ist.
